(19) Europäisches Patentamt
European Patent Office
Office européen des brevets

(11) **EP 3 034 955 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
***F24D 19/10*** *(2006.01)*

(21) Anmeldenummer: **15191800.0**

(22) Anmeldetag: **28.10.2015**

(54) **VERFAHREN ZUM DURCHFÜHREN EINES AUTOMATISIERTEN HYDRAULISCHEN ABGLEICH EINER HEINZUNGSANLAGE**

METHOD FOR CARRYING OUT AN AUTOMATED HYDRAULIC COMPENSATION OF A HEATING INSTALLATION

PROCÉDÉ D'EXÉCUTION D'UN ÉQUILIBRAGE HYDRAULIQUE AUTOMATISÉ D'UNE INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2014 DE 102014226450**

(43) Veröffentlichungstag der Anmeldung:
**22.06.2016 Patentblatt 2016/25**

(73) Patentinhaber: **Robert Bosch GmbH**
**70442 Stuttgart (DE)**

(72) Erfinder: **Stumpp, Hermann**
**73730 Esslingen (DE)**

(56) Entgegenhaltungen:
**DE-A1-102009 004 319     DE-A1-102012 020 750**
**DE-U1-202013 000 593**

**Beschreibung**

Die Erfindung betrifft ein Verfahren zum automatisierten Durchführen eines hydraulischen Abgleichs einer Heizungsanlage, umfassend zumindest einen Wärmeerzeuger, mindestens einen Wärmeverbraucher mit mindestens einem Ventil, einen Temperatursensor im Vorlauf und/oder im Rücklauf des Wärmeerzeugers. Weiter betrifft die Erfindung eine Heizungsanlage, die mit solch einem Verfahren automatisiert hydraulisch abgleichbar ist.

Stand der Technik

Die Patentschrift AT 509 913 B1 zeigt ein Verfahren zum Einstellen des Volumenstromes eines Heizmediums durch Raumwärmetauscher, wobei den Raumwärmetauschern unterschiedliche Prioritäten zugewiesen werden. Dabei wird bei Raumwärmetauschern mit hoher Priorität eine geringere Spreizung und mit niedriger Priorität eine größere Spreizung zugelassen, so dass für alle Raumwärmetauscher eine optimierte Rücklauftemperatur eingestellt werden kann.

Die DE 10 2009 004319 A1 offenbart ein Verfahren, Computerprogramm und Regelgerät für einen temperaturbasierten hydraulischen Abgleich.

Die DE 10 2012 020750 A1 offenbart ein Verfahren zur Optimierung eines thermischen und eines hydraulischen Abgleichs in einer Temperieranlage.

Es soll ein verbessertes und optimaleres Verfahren für einen automatisierten hydraulischen Abgleich und zur Diagnose eines Heizsystems gefunden werden, bei welchem auf zusätzliche Komponenten verzichtet werden kann.

Offenbarung der Erfindung

Diese Aufgabe wird durch das erfindungsgemäße Verfahren mit den Merkmalen des Anspruchs 1 gelöst.

Unter einem Wärmeerzeuger wird ein Gerät verstanden, das Wärme erzeugen kann, wobei die Wärme auf ein Wärmeträgermedium, wie Gas, ein Fluid oder dergleichen, übertragbar ist. Beispiele sind ein Gas- oder Ölbrenner, eine Solaranlage, eine Wärmepumpe oder ein Pelletofen. Dabei wird oftmals Wasser als das wärmeübertragende Medium verwendet. Zugleich wird unter dem Begriff des Wärmeerzeugers auch ein Gerät verstanden, das Kälte zur Verfügung stellen kann, wie Klimatisierungsgeräte.

Ein Wärmeverbraucher ist eine Einheit, welche Wärme aufnehmen und/oder abgeben kann, beispielsweise ein Heizkörper, welcher von Heizwasser durchströmt wird und darin enthaltene Wärme über seine Oberfläche an die Umgebungsluft abgibt. Unter dem Begriff Wärmeverbraucher werden aber auch Einheiten zusammengefasst, die Kälte aufnehmen und/oder abgeben können.

Ein Vorlauf eines Wärmeerzeugers ist eine Leitung, welche vom Wärmeerzeuger zum Wärmeverbraucher ein wärmeübertragendes Medium zuführt. Entsprechend ist eine Vorlauftemperatur die Temperatur dieses Mediums.

Ein Rücklauf eines Wärmeerzeugers ist entsprechend eine Leitung, welche das wärmeübertragende Medium vom Wärmeverbraucher zum Wärmeerzeuger zurückleitet. Eine Rücklauftemperatur ist die Temperatur dieses Mediums.

Der Erfindung liegt die Erkenntnis zugrunde, dass, abhängig vom Wärmeerzeuger, eine möglichst große oder kleine Differenz zwischen Vorlauf- und Rücklauftemperatur, auch Spreizung genannt, erwünscht ist, um eine möglichst niedrige oder hohe Rücklauftemperatur zu erhalten, was die Effizienz des Wärmeerzeugers mit Hinblick auf Energieverbrauch erhöht. Mit dem erfindungsgemäßen Verfahren wird die Versorgung der Wärmeverbraucher mit Hinblick darauf optimal gewährleistet, so dass jeder Wärmeverbraucher optimal mit Wärme versorgt wird. Das Verfahren läuft automatisiert, ohne einen benötigten Eingriff von außen, wobei keine zusätzlichen Komponenten für die Ausführung notwendig sind. Weiter ist das Verfahren robust und schnell.

Das Verfahren kann, wenn die Energiezufuhr exakt ermittelbar oder einstellbar ist, mit einem Temperatursensor durchgeführt werden. Werden jedoch Temperatursensoren im Vorlauf und im Rücklauf eingesetzt, ist die Differenz direkt und nicht nur indirekt bestimmbar, was die Qualität der Einstellung deutlich erhöht.

Durch die in den Unteransprüchen aufgeführten Merkmale sind vorteilhafte Weiterbildungen des erfindungsgemäßen Verfahrens nach dem Hauptanspruch möglich.

Die Bestimmung der Ventilstellung kann iterativ erfolgen, wobei in einem Schritt der Wärmeverbraucher mit der niedrigsten Rücklauftemperatur ermittelt und ausgehend hiervon die Ventilstellung bestimmt wird. Dies wird so lange wiederholt, bis alle Rücklauftemperaturen in einem vorgebbaren Bereich liegen. In diesem Fall liegen die Rücklauftemperaturen alle dicht beieinander, das heißt, jeder Wärmeverbraucher wird in etwa gleich gut mit Wärme versorgt. Unter der Versorgung des Wärmeverbrauchers mit Wärme ist gemeint, dass der Wärmeverbraucher von einem vorgebbaren Volumenstrom durchströmt wird oder werden kann. Wird ein Wärmeverbraucher mit zu wenig Wärme versorgt, ist es üblich, die Vorlauftemperatur und/oder den Volumenstrom zu erhöhen, was zu einem höheren Energieverbrauch führt. Der Vorteil liegt also in der optimalen Einstellung der Wärmeverbraucher, was den Energieverbrauch optimiert und letztendlich reduziert.

Die Heizungsanlage kann eine Pumpe zur Zirkulation des wärmeübertragenden Mediums, insbesondere Wasser, aufweisen, welche in ihrer Drehzahl einstellbar ist. Hierdurch kann der Volumenstrom des Wassers nach Bedarf eingestellt werden. In einem Schritt des Verfahrens kann überprüft werden, ob die Wärmeverbraucher mit Wasser durchströmt werden, was den Vorteil bietet, dass hierdurch erkannt werden kann, ob Fehler oder andere Hindernisse, die den Fluss des Wassers behindern, vorliegen, wie beispielsweise eine Verstopfung, ein Defekt der Pumpe usw. Hierfür kann innerhalb des Verfahrens ein vorgebbarer Differenzdruck der Pumpe, insbesondere ein maximaler Differenzdruck, eingestellt werden. Im Anschluss daran können alle Ventile bis auf eines geschlossen werden, wobei die Rücklauftemperatur des geöffneten Ventils bestimmt werden kann. Bei einem Ansteigen der Rücklauftemperatur kann ein entsprechendes Signal generiert werden, welches beispielsweise die Information trägt, dass der Wärmeverbraucher fehlerfrei durchströmbar ist.

Dieser Schritt wird schließlich für weitere oder auch alle Ventile wiederholt.

Vorteilhaft ist dabei, dass durch dieses Vorgehen gleichzeitig die Zuordnung der Temperatursensoren zu den Ventilen und Wärmeverbrauchern vorgenommen werden kann.

In einem Schritt des Verfahrens kann die Versorgung der Wärmeverbraucher ermittelt werden. Hierdurch kann der Wärmeverbraucher bestimmt werden, welcher im Vergleich zu seiner Größe und/oder Leistung mit dem geringsten Volumenstrom durchströmt wird. Um eine optimale Versorgung des Wärmeverbrauchers zu gewährleisten, sollte der Volumenstrom des am schlechtesten versorgten Wärmeverbrauchers gar nicht oder wenig begrenzt werden. Entsprechend kann der Volumenstrom für die anderen Wärmeverbraucher angepasst werden. Zur Ermittlung der Versorgung wird der Wärmeerzeuger mit einer vorgebbaren Leistung, insbesondere mit einer vorgebbaren minimalen Leistung, betrieben. Weiter werden alle Ventile mit einer vorgebbaren Ventilstellung, insbesondere mit einer maximalen Ventilstellung, geöffnet. In einem nächsten Schritt wird dann eine momentane Differenz zwischen Vorlauf- und Rücklauftemperatur der Wärmeverbraucher ermittelt. Sobald sich die momentane Differenz eines Wärmeverbrauchers in einem vorgebbaren Wertebereich befindet, das heißt insbesondere, sich die momentane Differenz nicht mehr stark ändert, befindet sich der Wärmeverbraucher in einem stationären Aufheizzustand.

Die Bestimmung der Versorgungsqualität kann durch einen weiteren Schritt des Verfahrens genauer vorgenommen werden. In diesem Schritt können die Rücklauftemperaturen der Wärmeverbraucher gemessen werden. Der Wärmeverbraucher mit der niedrigsten Rücklauftemperatur wird dann als der Wärmeverbraucher mit der geringsten Versorgung festgelegt. Die zu dieser niedrigsten Rücklauftemperatur gehörende Differenz wird abgespeichert und ist bei Bedarf für spätere Schritte des Verfahrens wieder abrufbar.

Dabei ist es vorteilhaft, wenn in einem weiteren Schritt die momentane Differenz mit der momentanen Differenz, welche zum Wärmeverbraucher mit der zuvor emittelten nierdrigsten Rücklauftemperatur gehört, verglichen werden kann. Anhand dieses Vergleichs kann eine neue Ventilstellung bestimmt werden.

Hierfür ist es von Vorteil, wenn die neue Ventilstellung anhand einer alten Ventilstellung und dem Verhältnis von momentaner Differenz zur momentanen Differenz, welche zum Wärmeverbraucher mit der zuvor emittelten nierdrigsten Rücklauftemperatur gehört, bestimmt werden kann. Dieser Schritt wird so lange wiederholt, bis die Änderung zwischen der neuen und der alten Ventilstellung kleiner als ein vorgebbarer Wert, insbesondere 5%, ist.

Genauer kann die neue Ventilstellung anhand der Gleichung $V_{neu} = V_{alt} * (T_{mom}/T_{Ref})$ bestimmt werden, wobei $V_{neu}$ die neue Ventilstellung, $V_{alt}$ die alte Ventilstellung, $T_{mom}$ die momentane Differenz und $T_{Ref}$ die momentane Differenz des am schlechtesten versorgten Wärmeverbrauchers ist.

Um weiter Energie zu sparen, ist es vorteilhaft, wenn ein Differenzdruck der Pumpe zur Zirkulation des wärmeübertragenden Mediums reduziert werden kann. Hierfür kann innerhalb des Verfahrens eine Soll-Rücklauftemperatur berechnet werden, wobei der Differenzdruck der Pumpe so lange herabgesetzt wird, bis die momentane Rücklauftemperatur unter der Soll-Rücklauftemperatur liegt oder diese erreicht, und/oder bis der momentane Differenzdruck einen vorgebbaren Differenzdruck erreicht.

Die Soll-Rücklauftemperatur kann anhand der Formel $T_{Soll,RL} = f*T_{VL} + O$ berechnet werden, wobei $T_{Soll,RL}$ die Soll-Rücklauftemperatur, f eine vorgebbare Steigung, $T_{VL}$ die Vorlauftemperatur und O ein vorgebbarer Wert sind.

Die Erfindung betrifft auch eine Heizungsanlage, umfassend zumindest einen Wärmeerzeuger, mindestens einen Wärmeverbraucher mit mindestens einem Ventil, einen Temperatursensor im Vorlauf des Wärmeerzeugers und vorzugsweise einen Temperatursensor im Rücklauf des Wärmeerzeugers. Die Heizungsanlage zeichnet sich dadurch aus, dass sie mit dem erfindungsgemäßen Verfahren automatisiert hydraulisch abgleichbar ist.

Zur Durchführung des Verfahrens weist die Heizungsanlage einen Temperatursensor im Rücklauf des Wärmeerzeugers auf. Zur einfachen Anbringung dieses Temperatursensors ist es weiter vorteilhaft, wenn dieser an ein Teil angringbar oder angebracht ist, welches magnetisch und/oder mit einer Klebefolie versehen ist.

Das Ventil am Wärmeverbraucher kann kabellos kommunikationsfähig, insbesondere funkfähig, ausgebildet sein, was den Vorteil hat, dass das Ventil auch von Ferne angesteuert werden kann, was die Flexibilität und Handhabbarkeit erhöht. Der Temperatursensor im Rücklauf kann ebenso kabellos kommunikationsfähig ausgebildet sein, was dessen Ansteuerung und Anbringung an den Wärmeverbraucher besonders vereinfacht. Dabei können das Ventil und der Temperatursensor direkt miteinander kommunizieren.

Zeichnung

In den Figuren ist eine schematische Darstellung einer erfindungsgemäßen Heizungsanlage zu sehen, welche mit dem erfindungsgemäßen Verfahren betrieben wird, sowie das erfindungsgemäße Verfahren, welches in der folgenden Beschreibung näher dargelegt wird. Es zeigen

| | |
|---|---|
| Figur 1 | eine Heizungsanlage, |
| Figur 2 | einen erfindungsgemäßen Temperatursensor im Rücklauf eines Wärmeverbrauchers, |
| Figur 3 | einen weiteren erfindungsgemäßen Temperatursensor, |
| Figuren 4a und 4b | den erfindungsgemäßen Temperatursensor in einer Nahansicht nach einem Sagittalschnitt, |
| Figur 5 | ein erfindungsgemäßes Verfahren in einem Flussdiagramm, |
| Figur 6 | ein erfindungsgemäßes Verfahren, |
| Figur 7a | ein Diagnoseverfahren für ein erfindungsgemäßes Verfahren, |
| Figur 7b | ein Optimierungsverfahren für ein erfindungsgemäßes Verfahren. |

Beschreibung der Zeichnungen

In den Figuren sind gleichen Baukomponenten gleiche Bezugszahlen zugeordnet.

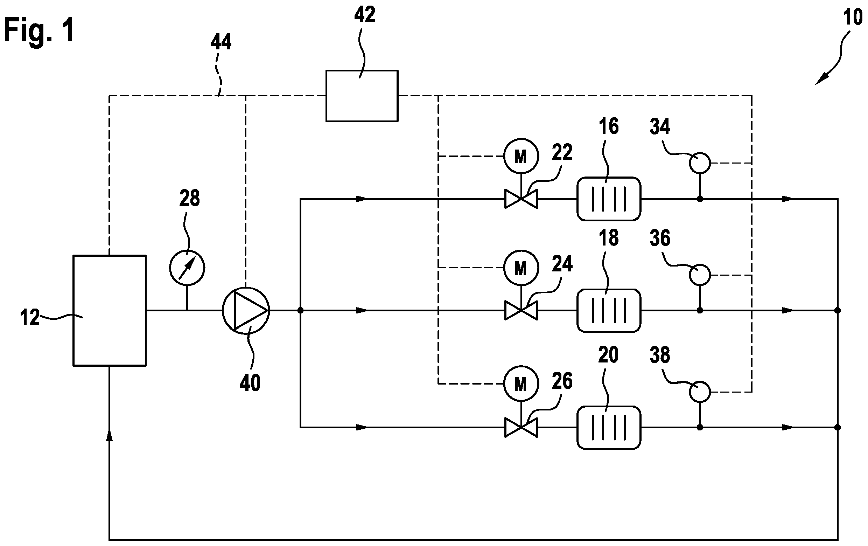

Figur 1 zeigt eine Heizungsanlage 10, aufweisend einen Wärmeerzeuger 12 in einem Heizkreis 14, einen ersten Wärmeverbraucher 16, einen zweiten Wärmeverbraucher 18 und einen dritten Wärmeverbraucher 20 mit jeweils einem ersten Ventil 22, einem zweiten Ventil 24 und einem dritten Ventil 26, einem ersten, zweiten und dritten Temperatursensor 28, 30, 32 im Vorlauf der Wärmevebraucher 16, 18, 20 und einem ersten, zweiten und dritten Temperatursensor 34, 36, 38 im Rücklauf. Weiter befindet sich im Heizkreis 14 eine Pumpe 40 zur Zirkulation des Heizwassers. Zum Betrieb der Heizungsanlage können weitere Komponenten vorgesehen sein, die hier nicht gezeigt sind.

Es ist auch möglich, nur einen Temperatursensor 28 im Vorlauf und/oder einen Temperatursensor 34 im Rücklauf vorzusehen, was das System jedoch träge macht, wobei Einflüsse der Zuleitung und Ableitung mit einfließen.

Der Wärmeerzeuger 12, die Wärmeverbraucher 16, 18, 20, die Ventile 22, 24, 26, die Temperatursensoren 28, 30, 32, 34, 36, 38 und die Pumpe sind hydraulisch und elektronisch miteinander verbunden. Die Heizungsanlage 10 weist weiter eine Regel- und/oder Steuereinheit 42, welche mit den Komponenten im Heizkreis 14 kabellos oder kabelgebunden verbunden ist. Diese Verbindung ist in der Figur 1 durch eine gestrichelte Linie dargestellt.

Die Ventile 22, 24, 26 sind mit einem elektronischen Stellantrieb ausgestattet und kommunizieren kabellos oder kabelgebunden mit der Regel- und/oder Steuereinheit 42.

Alternativ können sich in der Heizungsanlage 10 mehrere Wärmeerzeuger 12 und mehr als drei Wärmeverbraucher 16, 18, 20 befinden. Die Regel- und/oder Steuereinheit 42 kann auch ein Teil des Wärmeerzeugers 12 sein und sich entweder am Gehäuse oder im Inneren des Wärmeerzeugers 12 befinden.

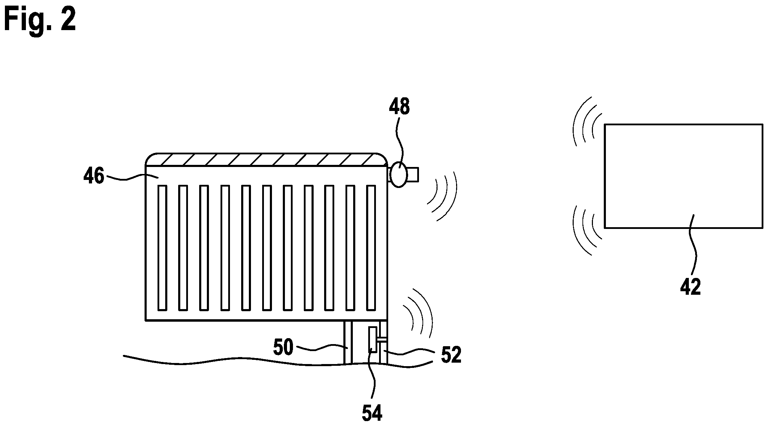

Figur 2 zeigt einen weiteren Wärmeverbraucher 46 mit einem Ventil 48, welches kabellos mit der Regel- und/oder Steuereinheit 42 kommuniziert. Der Wärmeverbraucher 46 weist eine Vorlaufleitung 50, eine Rücklaufleitung 52 und einen Temperatursensor 54 in der Rücklaufleitung 52 auf. Der Temperatursensor 54 ist funkfähig ausgestaltet und kommuniziert die gemessene Temperatur an die Regel- und/oder Steuereinheit 42 und/oder an das Ventil 48, welches ebenfalls funkfähig ausgebildet ist und mit der Regel- und/oder Steuereinheit 42 kommuniziert. Der Temperatursensor 54 verfügt über eine eigene Stromversorgung mit einer Batterie. Alternativ können auch andere Energiequellen genutzt werden, wie ein Akkumulator oder eine kleine Solareinheit. Auch Chips, wie NFC oder RFID, sind denkbar, oder Bluetooth-Technologie.

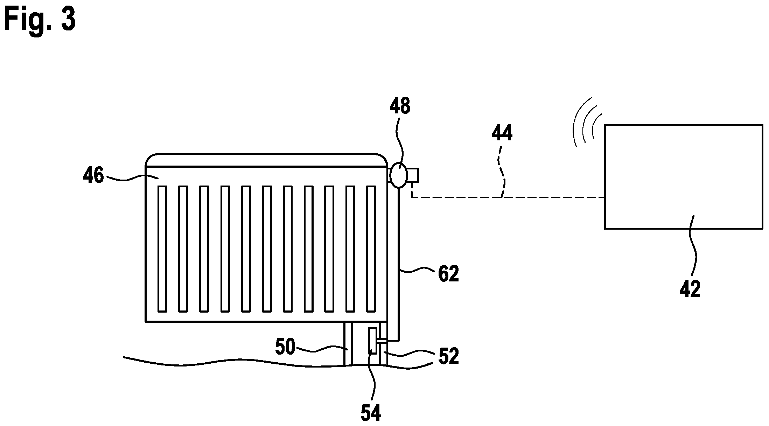

In der Figur 3 ist ebenfalls ein Wärmeverbraucher 46 mit einem Ventil 48, einer Vorlaufleitung 50 und einer Rücklaufleitung 52 mit einem Temperatursensor 54 dargestellt. Das Ventil 48 kommuniziert mit der Regel- und/oder Steuereinheit 42 kabelgebunden, dargestellt durch die Verbindung 44.

Bei den Verbindungen zwischen Ventil 48, Temperatursensor 54 und/oder Regel- und/oder Steuereinheit 42 kann es sich um kabelgebundene oder kabellose Verbindungen handeln. Auch Mischformen sind denkbar, bei denen das Ventil 48 beispielsweise kabellos kommuniziert und der Temperatursensor 54 kabelgebunden.

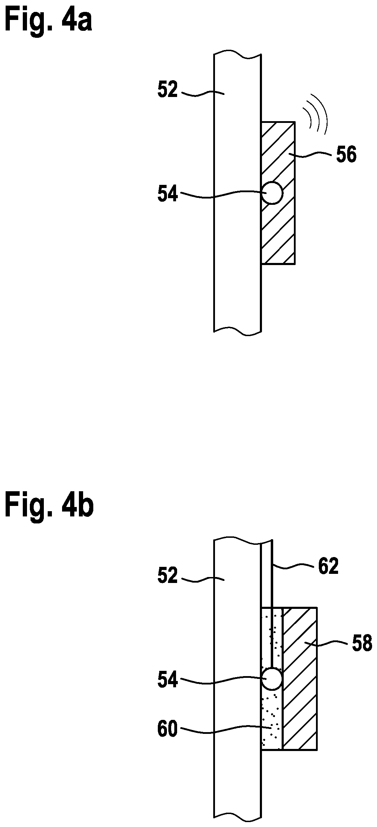

Figur 4a zeigt einen erfindungsgemäßen Temperatursensor 54 zum Erfassen der Rücklauftemperatur in seitlicher Ansicht. Der Temperatursensor 54 ist an einem magnetischen Teil befestigt, welches hier biegsam ausgebildet ist. Das biegsame, magnetische Teil lässt sich zusammen mit dem Temperatursensor 54 einfach an der Rücklaufleitung 52 des Wärmeverbrauchers 46 anbringen. Der Temperatursensor 54 kommuniziert kabellos, beispielsweise über Funk, mit dem Ventil 48.

Figur 4b zeigt eine alternative Ausführungsform eines erfindungsgemäßen Temperatursensors 54. Hier ist der Temperatursensor 54 unter Verwendung einer beidseitigen Klebefolie 60 an einem Teil 58 befestigt. Zwischen Klebefolie 60 und Teil 58 verläuft vom Temperatursensor 54 zum Ventil 48 ein Kabel, welches die Verbindung zwischen Temperatursensor 54 und Ventil 48 ermöglicht. Das Teil 58 ist mit Hilfe der Klebefolie 60 an der Rücklaufleitung 52 befestigbar.

Das Teil 58 kann aus einem starren oder biegsamen Stoff gearbeitet sein.

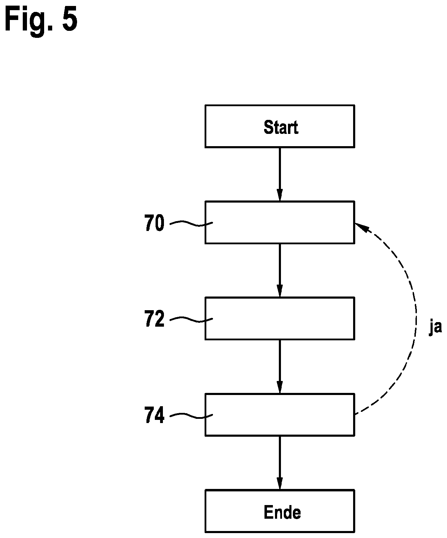

Das Verfahren zum Durchführen eines automatisierten hydraulischen Abgleichs wird anhand der Figur 5 näher erläutert, wobei Bezug auf die Heizungsanlage 10 der Figur 1 genommen wird.

Im Ausführungsbeispiel läuft das Verfahren in der Regel- und/oder Steuereinheit 42. Alternativ kann es aber auch auf jedem anderen Gerät ausgeführt werden, welches über die nötigen Voraussetzungen, wie eine Recheneinheit, verfügt. Beispiele sind Mobiltelefone oder Computer. Dadurch kann der hydraulische Abgleich beispielsweise auch von Ferne durchgeführt werden.

Im Folgenden wird davon ausgegangen, dass eine höhere Spreizung, das heißt, eine höhere Differenz zwischen Vorlauf- und Rücklauftemperatur, erwünscht ist, wobei eine niedrigere Rücklauftemperatur bevorzugt wird. Dies trifft beispielsweise für Gasbrenner zu. Im Falle einer Wärmepumpe ist eine möglichst geringe Spreizung mit einer passenden, niedrigeren Vorlauftemperatur erwünscht, um einen möglichst hohen Wirkungsgrad zu erzielen. Das Verfahren läuft in diesem Fall analog.

Das Verfahren wird entweder selbstständig oder durch manuelle Eingabe gestartet.

In den Schritten 70 und 72 wird der am schlechtesten mit Wärme versorgte Wärmeverbraucher 16, 18, 20 ermittelt. Unter der Versorgung eines Wärmeverbrauchers mit Wärme ist gemeint, dass der Wärmeverbraucher von einem vorgebbaren Volumenstrom durchströmt wird oder durchströmbar ist. Ein Wärmeverbraucher gilt demnach als schlecht versorgt, wenn er bei maximal geöffnetem Ventil von einem geringen Volumenstrom durchströmt wird.

Hierfür werden in Schritt 70 die Rücklauftemperaturen der Temperatursensoren 34, 36, 38 und die Vorlauftemperaturen der Temperatursensoren 28, 30, 32 bestimmt.

In Schritt 72 werden die gemessenen Rücklauftemperaturen miteinander verglichen. Die niedrigste Rücklauftemperatur wird dem am schlechtesten mit Wärme versorgten Wärmeverbraucher 16, 18, 20 zugeordnet und dient im weiteren Verfahren als Referenzwert. Die Ventilstellung des Ventils 22, 24, 26 des am schlechtesten versorgten Wärmeverbrauchers 16, 18, 20 wird in der Folge nicht begrenzt.

In Schritt 74 werden nun die Ventilöffnungen der übrigen Ventile 22, 24, 26 derart reduziert, dass die Rücklauftemperaturen an den dazugehörenden Temperatursensoren 28, 30, 32 in einem vorgebbaren Bereich liegen. Der Bereich wird idealerweise so gewählt, dass die Rücklauftemperaturen annähernd gleich sind. In diesem Fall werden die Wärmeverbraucher 16, 18, 20, relativ zu ihrer Größe bzw. Leistung, annähernd mit gleich viel Wärme versorgt.

Die Schritte 70 bis 74 können iterativ wiederholt werden, falls nötig. Dies ist in Figur 5 als gestrichelter Pfeil dargestellt. Hierfür ist in Schritt 74 eine Abfrage vorgesehen, wobei überprüft wird, ob die Rücklauftemperaturen an den Temperatursensoren 28, 30, 32 im vorgebbaren Bereich liegen. Ist dem so, so endet das Verfahren, falls nicht, werden die Schritte 70 bis 74 wiederholt.

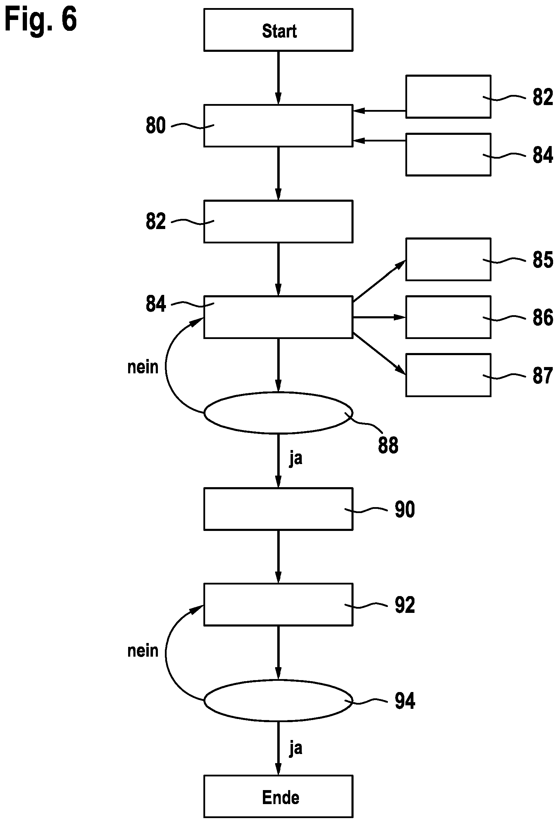

Anhand Figur 6 wird ein weiteres erfindungsgemäßes Verfahren erläutert.

Wie zuvor wird das Verfahren entweder selbstständig oder durch manuelle Eingabe gestartet.

In den Schritten 80 bis 90 wird der am schlechtesten mit Wärme versorgte Wärmeverbraucher 16, 18, 20 ermittelt.

In Schritt 80 wird für die Pumpe 40 ein Differenzdruck 82 und/oder eine Drehzahl vorgegeben. Im Ausführungsbeispiel wird ein maximaler Differenzdruck gewählt, mit welchem die Pumpe 40 betrieben wird. Zudem wird eine Soll-Leistung 84 für den Wärmeerzeuger 12 vorgegeben. Im Ausführungsbeispiel handelt es sich um eine geringe, insbesondere eine minimale, Soll-Leistung, so dass der Wärmeerzeuger 12 in einem unteren Modulationsbereich betrieben wird, um Energie zu sparen und die Räume, in denen sich die Wärmeverbraucher 16, 18, 20 befinden, nicht unnötig aufzuheizen. Optional kann eine Soll-Vorlauftemperatur für den Wärmeerzeuger 12 vorgegeben werden.

In Schritt 82 wird eine Ventilstellung aller Ventile 16, 18, 20 vorgegeben; im Ausführungsbeispiel werden die Ventile 16, 18, 20 maximal geöffnet.

Im Schritt 84 werden, wie in Schritt 70, die Rücklauftemperaturen der Temperatursensoren 34, 36, 38 und die Vorlauftemperaturen der Temperatursensoren 28, 30, 32 bestimmt. Weiter werden die Spreizungen an jedem Wärmeverbraucher 16, 18, 20 berechnet, das heißt, eine erste Differenz 85 zwischen Vorlauf- und Rücklauftemperatur an den Temperatursensoren 28, 34, eine zweite Differenz 86 an den Temperatursensoren 30, 36 und eine dritte Differenz 87 an den Temperatursensoren 32, 38.

In Schritt 88 werden nun alle Differenzen 85, 86, 87 miteinander verglichen, und es wird eine Abfrage durchgeführt. Falls sich die Differenzen 85, 86, 87 in einem vorgebbaren Bereich befinden, wird das Verfahren in Schritt 90 fortgesetzt. Der Bereich wird so vorgegeben, dass die Differenzen 85, 86, 87 dicht beieinander liegen, woraus folgt, da die Vorlauftemperaturen als annähernd gleich vorgegeben wurden, dass die Rücklauftemperaturen der Wärmeverbraucher 16, 18, 20 annähernd gleich sind. In diesem Fall hat sich an den Wärmeverbauchern ein stationärer Aufheizzustand eingestellt. Haben die Differenzen 85, 86, 87 den Bereich noch nicht erreicht, so kehrt das Verfahren zu Schritt 84 zurück.

Nachdem nach Schritt 88 ein stationärer Heizzustand vorliegt, werden in Schritt 90 die Rücklauftemperaturen miteinander verglichen. Der Wärmeverbraucher 16, 18, 20 mit der niedrigsten Rücklauftemperatur gilt als der am schlechtesten versorgte Wärmeverbaucher 16, 18, 20. Ohne Beschränkung wird angenommen, dass der erste Wärmeverbraucher 16 der am schlechtesten versorgte sei, mit der dazu gehörenden ersten Differenz 85 zwischen der Vorlauftemperatur am Temperatursensor 28 und der Rücklauftemperatur am Temperatursensor 34. Die Ventilstellung des entsprechenden ersten Ventils 22 wird nicht begrenzt und wird im weiteren Verlauf ausgenommen.

In Schritt 92 werden, wie in Schritt 74, die Ventilöffnungen der übrigen Ventile 24, 26 schrittweise so lange reduziert, bis die Rücklauftemperaturen an den dazugehörenden Temperatursensoren 30, 32 annähernd gleich sind. Tritt dieser Fall ein, werden die Wärmeverbraucher 16, 18, 20 annähernd mit gleich viel Wärme versorgt. Hierfür wird ausgehend von der momentanen Ventilstellung der Ventile 24, 26 eine neue Ventilstellung bestimmt. Hierfür werden die Differenzen 86, 87 bestimmt und als momentane Differenzen abgespeichert. Auch die momentane Differenz 85 des zuvor in Schritt 88 ermittelten, am schlechtesten versorgten Wärmeverbrauchers 16 wird bestimmt. Anschließend werden die momentanen Differenzen 86, 87 mit der momentanen Differenz 85 des am schlechtesten versorgten Wärmeverbrauchers 16 verglichen. Anhand dieses Vergleichs wird ausgehend von der alten Ventilstellung die neue Ventilstellung berechnet. Zur Berechnung wird das Verhältnis zwischen den momentanten Differenzen 86, 87 zur momentanen Differenz 85, welche zur niedrigsten Rücklauftemperatur des Wärmeverbrauchers 16 gehört, herangezogen.

Im Ausführungsbeispiel wird hierfür die Gleichung $V_{\_neu} = V_{\_alt} * (T_{\_mom}/T_{\_Ref})$ verwendet, wobei $V_{\_neu}$ die neue Ventilstellung, $V_{\_alt}$ die alte Ventilstellung, $T_{\_mom}$ die momentane Differenz 86, 87 und $T_{\_Ref}$ die momentane Differenz 85 des am schlechtesten versorgten Wärmeverbrauchers 16 ist.

In Schritt 94 wird die neue mit der alten Ventilstellung verglichen, wobei abgefragt wird, ob die Änderung zwischen der neuen und der alten Ventilstellung kleiner als ein vorgebbarer Wert ist. Dieser Wert kann beispielsweise in Prozent angegeben sein. Im Ausführungsbeispiel wird als Wert 5% vorgegeben. Ist die Änderung zwischen der neuen und alten Ventilstellung größer als dieser Wert, kehrt das Verfahren zu Schritt 92 zurück. Sobald die Änderung den Wert erreicht oder unterschreitet, wird das Verfahren beendet. Die Wärmeverbraucher 16, 18, 20 sind nun hydraulisch abgeglichen.

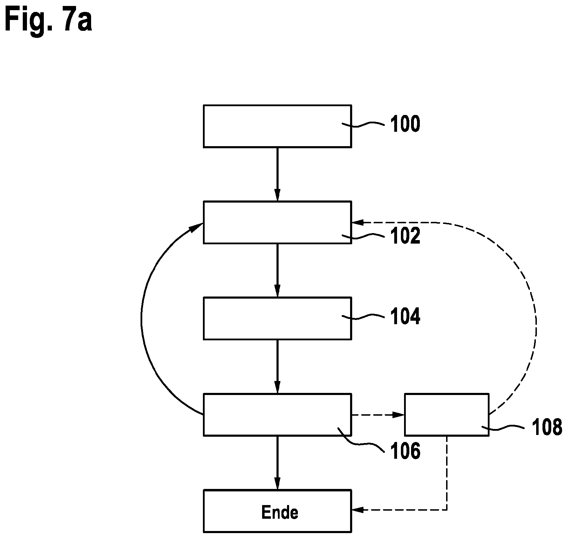

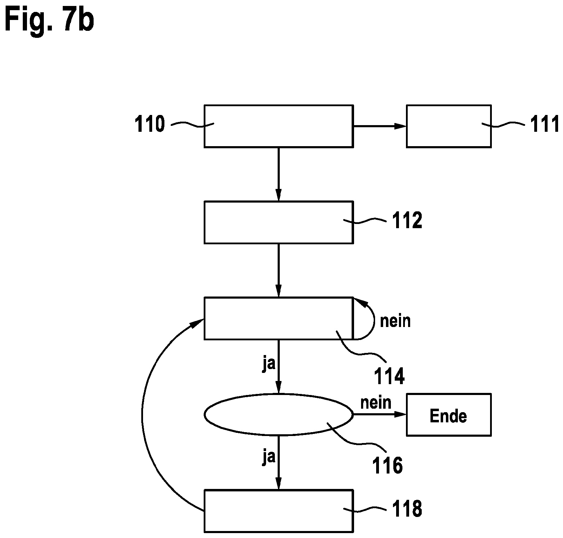

Das oben geschilderte Verfahren kann um Schritte erweitert werden, die das Verfahren weiter optimieren. Dies wird anhand der Figuren 7a und 7b dargestellt.

Figur 7a zeigt ein Diagnoseverfahren zur Erweiterung des erfindungsgemäßen Verfahrens. Das Diagnoseverfahren wird vor dem Start des erfindungsgemäßen Verfahrens durchgeführt. Sollte es allerdings notwendig sein, so kann es auch an beliebiger Stelle innerhallb des erfindungsgemäßen Verfahrens ausgeführt werden.

Anhand des Diagnoseverfahrens wird überprüft, ob die Wärmverbraucher 16, 18, 20 mit Wasser versorgt werden. Hierbei können beispielsweise defekte Ventile und/oder verstopfte Rohrleitungen erkannt werden. Auch eine geringe Füllung oder Luft im Wärmeverbraucher 16, 18, 20 ist erkennbar. Weiter wird die Zurodnung der Temperatursensoren 34, 36, 38 im Rücklauf zu den dazu gehörenden Wärmeverbrauchern 16, 18, 20 vorgenommen.

Dafür wird in Schritt 100 ein Differenzdruck und/oder eine Drehzahl für die Pumpe 40 vorgegeben. Hier wird ein maximaler Differenzdruck gewählt. Zudem wird eine Soll-Leistung für den Wärmeerzeuger 12 vorgegeben. Im Ausführungsbeispiel handelt es sich um eine minimale Soll-Leistung. Optional kann eine Soll-Vorlauftemperatur für den Wärmeerzeuger 12 vorgegeben werden. Der hier gewählte Differenzdruck kann mit dem Differenzdruck 82 aus Schritt 80 übereinstimmen; dasselbe trifft auf die Soll-Leistung zu, die als die Soll-Leistung 84 aus Schritt 80 gewählt werden kann.

In Schritt 102 werden alle Ventile 22, 24, 26 bis auf eines geschlossen. Ohne Einschränkung wird angenommen, dass das erste Ventil 22 geöffnet wird oder geöffnet bleibt. Dabei wird eine maximale Ventilstellung vorgegeben.

In Schritt 104 werden die Rücklauftemperaturen an den Temperatursensoren 34, 36, 38 im Rücklauf gemessen. Zugleich wird ein Zähler gestartet, der die Zeit ab Erstmessung der Rücklauftemperaturen misst. Zu erwarten ist, dass die Rücklauftemperatur am Temperatursensor 34 im Rücklauf des ersten Wämeverbrauchers 16 mit dem geöffneten ersten Ventil 22 innerhalb einer vorgebbaren Zeit ansteigt.

In Schritt 106 wird überprüft, ob ein Anstieg der Rücklauftemperatur festgestellt wurde und ob dieser Anstieg innerhalb der vorgebbaren Zeit stattfand. Als Zeit kann beispielsweise 30 Minuten vorgegeben werden. Ist die Rücklauftemperatur am Temperatursensor 34 innerhalb der vorgebbaren Zeit angestiegen, so gilt der dazu gehörende Wärmeverbraucher 16 als funktionstüchtig. Wird die vorgebbare Zeit überschritten und/oder wird kein Anstieg der Rücklauftemperatur festgestellt, so wird der Wärmeverbraucher 16 entweder nicht oder nur schwach von Wasser durchströmt, oder der Temperatursensor 34 ist fehlerhaft. In diesem Fall wird eine entsprechende Meldung ausgegeben, wobei der betroffene Wärmeverbraucher 16 und/oder sein dazugehöriges erstes Ventil 22 für spätere Zwecke abgespeichert werden.

Im Falle eines Anstiegs der Rücklauftemperatur innerhalb der vorgebbaren Zeit wird der dazugehörige Temperatursensor 34 im Schritt 108 dem entsprechenden Wärmeverbraucher 16 zugeordnet.

Der Schritt 108 kann optional durchgeführt werden, was in der Figur 7a mit einer gestrichelten Linie dargestellt ist.

Die Schritte 102 bis 106 bzw. 102 bis 108 werden für die übrigen Ventile 24, 26 wiederholt. Dann sind alle Temperatursensoren 34, 36, 38 den zugehörigen Ventilen 22, 24, 26 und Wärmeverbrauchern 16, 18, 20 eindeutig zugeordnet.

Figur 7b zeigt ein Optimierungsverfahren zur Erweiterung des erfindungsgemäßen Verfahrens zur Erhöhung der Energieeffizienz. Idealerweise wird das Optimierungsverfahren im Anschluss an das erfindungsgemäße Verfahren durchgeführt, wobei es jedoch bei Bedarf auch an jeder anderen Stelle ausgeführt werden kann.

Bei Brennwert-Wärmeerzeugern wird oftmals eine möglichst hohe Differenz zwischen Vorlauf- und Rücklauftemperatur angestrebt, was durch eine höhere Vorlauftemperatur und eine niedrigere Rücklauftemperatur erreicht werden kann. Bei Wärmepumpen ist dagegen eine möglichst geringe Spreizung erwünscht, um einen möglichst hohen Wirkungsgrad zu erreichen. Ziel des Optimierungsverfahrens ist es, zusätzlich dazu die Drehzahl der Pumpe 40 und also den Volumenstrom zu verringern. Hierzu wird der Differenzdruck der Pumpe 40 verringert.

Differenzdruck, Volumenstrom und Drehzahl stehen in einem Zusammenhang. Die Drehzahl einer Pumpe ist proportional zum Volumenstrom durch die Pumpe. Die Förderhöhe der Pumpe ändert sich mit dem Quadrat der Drehzahl, wobei die Förderhöhe auch über den Differenzdruck bestimmbar ist. Damit beeinflusst die Drehzahl einer Pumpe den Differenzdruck und umgekehrt. Insbesondere führt eine Drehzahlreduzierung zu einer Reduzierung des Differenzdrucks.

In Schritt 110 wird eine Soll-Rücklauftemperatur 111 berechnet. Hierfür wird die Soll-Rücklauftemperatur in linearer Abhängigkeit von der gemessenen Vorlauftemperatur der Wärmeverbraucher 16, 18, 20 angenommen.

Vorzugsweise wird hierfür die Gleichung $T_{Soll,RL} = f \cdot T_{VL} + O$ verwendet, wobei $T_{Soll,RL}$ die Soll-Rücklauftemperatur, f und O vorgebbare Parameter und $T_{VL}$ die Vorlauftemperatur sind. Die Parameter f und O können in Abhängigkeit vom jeweiligen Wärmeerzeuger gewählt werden.

Beispielsweise soll bei Brennwert-Wärmeerzeugern eine möglichst hohe Spreizung erzielt werden, wobei also die Soll-Rücklauftemperatur 111 üblicherweise kleiner als die Vorlauftemperatur ist. Dies gibt Bedingungen an die Parameter f und O vor: Diese müssen so gewählt sein, dass die Soll-Rücklauftemperatur 111 kleiner als die Vorlauftemperatur ist. Hieraus folgt die Bedingung:

$$0 < O/(1-f) < T_{VL}.$$

Für $0 < f < 1$ und O so, dass $0 < O < (1-f) \cdot T_{VL}$, wobei nun $T_{VL}$ und f bekannt sind, ist $T_{Soll,RL} < T_{VL}$. Beispielsweise sei die Vorlauftemperatur 70°C an einem der Wärmeverbraucher 16, 18, 20 gemessen worden. Wählt man $f = 0,5$ so muss $O < 35°C$ sein. Wählt man $O = 20°C$, so ist die Soll-Rücklauftemperatur 111 gleich 55°C. Anhand einer Variation der Parameter kann auch eine optimale Soll-Rücklauftemperatur 111 für den Wärmeerzeuger bestimmt werden.

Handelt es sich bei dem Wärmeerzeuger 12 beispielsweise um eine Wärmepumpe, so würden die Parameter f und O analog gemäß der Bedingung bestimmt werden, dass die Differenz zwischen $T_{VL}$ und $T_{Soll,RL}$ möglichst klein ist.

Im Schritt 112 wird eine Ventilstellung für die Ventile 22, 24, 26 vorgegeben. Schließt sich das Optimierungsverfahren beispielweise an den automatisierten Abgleich, wie oben beschrieben, an, so würden die dort ermittelten Ventilstellungen ausgewählt werden. Ohne hydraulischen Abgleich wäre die maximale Ventilöffnung eine Wahl. Zudem wird eine Soll-Leistung für den Wärmeerzeuger 12 vorgegeben. Vorzugsweise wird diese, wie bereits geschildert, so gewählt, dass die Wärmeerzeuger 12 wenig Wärme abgeben, um möglichst wenig Energie zu verbrauchen. Weiter wird in Schritt 112 die Pumpe 40 auf einen vorgebbaren Differenzdruck eingestellt. Vorzugsweise ist dieser Differenzdruck gleich dem, welcher beim automatisierten hydraulischen Abgleich verwendet wurde (siehe Schritt 80 und Schritt 100). Alternativ kann bei Bedarf auch ein maximaler Differenzdruck gewählt werden.

Wie in Schritt 88 werden die Rücklauftemperaturen der Wärmverbraucher 16, 18, 20 in Schritt 114 so lange gemessen, bis sich ein stationärer Aufheizzustand eingestellt hat.

Ist der stationäre Aufheizzustand eingetreten, so wird in Schritt 114 überprüft, ob die momentane Rücklauftemperatur des Wärmeverbrauchers 16, 18, 20 größer als die Soll-Rücklauftemperatur 111 ist.

Falls nicht, so kann der Differenzdruck der Pumpe 40 nicht weiter reduziert werden, und das Verfahren wird beendet. Das Verfahren wird auch beendet, wenn der Differenzdruck der Pumpe 40 nicht weiter reduzierbar ist.

Falls die momentane Rücklauftemperatur größer als die Soll-Rücklauftemperatur 111 ist, wird der Differenzdruck in Schritt 118 reduziert. Hierfür wird der nächstkleinere Wert, der von der Pumpe 40 zur Verfügung gestellt wird, verwendet. Selbstverständlich kann ein reduzierter Differenzdruck auch vorgegeben werden.

Das Verfahren wird dann in Schritt 114 fortgesetzt; die Schritte 114 bis 118 werden so lange wiederholt, bis in Schritt 116 erkannt wird, dass die momentane Rücklauftemperatur kleiner als die Soll-Rücklauftemperatur 111 ist und/oder der Differenzdruck nicht weiter reduziert werden kann. Der ermittelte Differenzdruck wird gespeichert und steht der Regel- und/oder Steuereinheit 42 zur Verfügung.

Den obigen Schilderungen ist zu entnehmen, dass das Verfahren je nach Bedarf flexibel erweiterbar oder reduzierbar ist, beispielsweise um das Diagnose- und/oder Optimierungsverfahren. Innerhalb des Verfahrens können bei Bedarf auch Schritte übersprungen werden.

**Patentansprüche**

1. Verfahren zum automatisierten Durchführen eines hydraulischen Abgleichs einer Heizungsanlage (10), umfassend zumindest einen Wärmeerzeuger (12), Wärmeverbraucher (16, 18, 20) mit jeweils mindestens einem Ventil (22, 24, 26), einem Temperatursensor (28, 30, 32) im Vorlauf des Wärmeerzeugers (12) und einem Temperatursensor (34, 36, 38) im Rücklauf des Wärmeerzeugers (12), **dadurch gekennzeichnet, dass** der Wärmeverbraucher (16, 18, 20) mit der niedrigsten Rücklauftemperatur ermittelt wird, und dass ausgehend von der niedrigsten Rücklauf- temperatur die Ventilstellung der Ventile (22, 24, 26) der anderen Wärmeverbraucher (16, 18, 20) derart bestimmt werden, dass alle Rücklauftemperaturen in einem vorgebbaren Bereich liegen.

2. Verfahren nach Anspruch 1, **dadurch gekennzeichnet, dass** die Bestimmung der Ventilstellung iterativ durchgeführt wird.

3. Verfahren nach einem der Ansprüche 1 oder 2, **dadurch gekennzeichnet, dass** die Heizungsanlage (10) eine Pumpe (40) aufweist, welche in ihrer Drehzahl einstellbar ist, und dass überprüft wird, ob die Wärmeverbraucher (16, 18, 20) mit Wasser durchströmt werden, wobei

    - ein vorgebbarer Differenzdruck, insbesondere ein maximaler Differenzdruck, der Pumpe (40) eingestellt wird,
    - alle Ventile (16, 18, 20) bis auf ein Ventil (16, 18, 20) geschlossen werden, wobei eine Rücklauftemperatur des geöffneten Ventils (16, 18, 20) ermittelt wird, wobei bei einem Ansteigen der Rücklauftemperatur ein Signal generiert wird,
    - dieser Schritt für weitere, insbesondere alle, Ventile (16, 18, 20) wiederholt wird.

4. Verfahren nach einem der Ansprüche 1 bis 3, **dadurch gekennzeichnet, dass** bei einem Ansteigen der Rücklauf- temperatur der entsprechende Temperatursensor (34, 36, 38) dem Wärmeverbraucher (16, 18, 20) mit dem geöffneten Ventil (22, 24, 26) zugeordnet wird.

5. Verfahren nach einem der Ansprüche 1 bis 4, **dadurch gekennzeichnet, dass** zur Ermittlung der Versorgung eines Wärmeverbrauchers (16, 18, 20) der Wärmeerzeuger (12) mit einer vorgebbaren Leistung, insbesondere einer vorgebbaren minimalen Leistung, betrieben wird, wobei alle Ventile (22, 24, 26) mit einer vorgebbaren Ventilstellung geöffnet werden, und wobei eine momentane Differenz (85, 86, 87) zwischen Vorlauf- und Rücklauftemperatur an jedem Wärmeverbraucher (16, 18, 20) so lange ermittelt wird, bis die momentane Differenz (85, 86, 87) einen vorgebbaren Wertebereich erreicht.

6. Verfahren nach einem der Ansprüche 1 bis 5, **dadurch gekennzeichnet, dass** die Rücklauftemperaturen der Wärmeverbraucher (16, 18, 20) miteinander verglichen werden, wobei der Wärmeverbraucher (16, 18, 20) mit der niedrigsten Rücklauftemperatur als der am schlechtesten versorgte Wärmeverbraucher (16, 18, 20) festgelegt wird.

7. Verfahren nach einem der Ansprüche 1 bis 6, **dadurch gekennzeichnet, dass** die momentane Differenz (85, 86, 87) mit der momentanen, zum am schlechtesten versorgten Wärmeverbraucher (16, 18, 20) gehörenden Differenz (85, 86, 87) verglichen wird, wobei anhand dieses Vergleichs eine neue Ventilstellung bestimmt wird.

8. Verfahren nach Anspruch 7, **dadurch gekennzeichnet, dass** die neue Ventilstellung anhand einer alten Ventilstellung und dem Verhältnis von momentaner Differenz (85, 86, 87) zur momentanen Differenz (85, 86, 87), welche zum am schlechtesten versorgten Wärmeverbraucher gehört, bestimmt wird, wobei dieser Schritt so lange wiederholt wird, bis die Änderung zwischen der neuen und der alten Ventilstellung kleiner als ein vorgebbarer Wert, insbesondere 5%, ist.

9. Verfahren nach Anspruch 8, **dadurch gekennzeichnet, dass** die neue Ventilstellung anhand der Gleichung

$$V_{neu} = V_{alt} * (T_{mom}/T_{Ref})$$

bestimmt wird, wobei $V_{neu}$ die neue Ventilstellung, $V_{alt}$ die alte Ventilstellung, $T_{mom}$ die momentane Differenz (85, 86, 87) und $T_{Ref}$ die momentane, zum am schlechtesten versorgten Wärmeverbraucher gehörende Differenz (85, 86, 87) ist.

**10.** Verfahren nach einem der Ansprüche 3 bis 9, **dadurch gekennzeichnet, dass** eine Soll-Rücklauftemperatur (111) berechnet wird, wobei ein Differenzdruck der Pumpe (40) so lange herabgesetzt wird, bis die momentane Rücklauftemperatur unter der Soll-Rücklauftemperatur (111) liegt oder diese erreicht, und/oder bis der momentane Differenzdruck einen vorgebbaren Differenzdruck erreicht.

**11.** Verfahren nach Anspruch 10, **dadurch gekennzeichnet, dass** die Soll-Rücklauftemperatur (111) anhand der Formel

$$T\_{Soll,RL} = f * T\_{VL} + O$$

berechnet wird, wobei $T_{Soll,RL}$ die Soll-Rücklauftemperatur (111), f und O vorgebbare Parameter und $T_{VL}$ die Vorlauftemperatur sind, wobei die Parameter f eine vorgebbare Steigung und O einem vorgebbaren Wert entsprechen.

## Claims

**1.** Method for carrying out hydraulic balancing of a heating system (10) in an automated manner, comprising at least one heat generator (12), heat consumers (16, 18, 20) each with at least one valve (22, 24, 26), a temperature sensor (28, 30, 32) in the feed line of the heat generator (12) and a temperature sensor (34, 36, 38) in the return line of the heat generator (12), **characterized in that** the heat consumer (16, 18, 20) with the lowest return line temperature is ascertained, and **in that**, starting from the lowest return line temperature, the valve position of the valves (22, 24, 26) of the other heat consumers (16, 18, 20) is determined in such a way that all return line temperatures lie in a prespecifiable range.

**2.** Method according to Claim 1, **characterized in that** the valve position is determined in an iterative manner.

**3.** Method according to either of Claims 1 and 2, **characterized in that** the heating system (10) has a pump (40), the rotation speed of which pump can be adjusted, and **in that** a check is made as to whether water flows through the heat consumers (16, 18, 20), wherein

- a prespecifiable differential pressure, in particular a maximum differential pressure, of the pump (40) is set,
- all valves (16, 18, 20) apart from one valve (16, 18, 20) are closed, wherein a return line temperature of the opened valve (16, 18, 20) is ascertained, wherein a signal is generated when the return line temperature rises,
- this step is repeated for further, in particular all, valves (16, 18, 20).

**4.** Method according to one of Claims 1 to 3, **characterized in that**, when the return line temperature rises, the corresponding temperature sensor (34, 36, 38) is associated with the heat consumer (16, 18, 20) with the opened valve (22, 24, 26).

**5.** Method according to one of Claims 1 to 4, **characterized in that**, for ascertaining the supply of a heat consumer (16, 18, 20), the heat generator (12) is operated with a prespecifiable power, in particular a prespecifiable minimum power, wherein all valves (22, 24, 26) are opened with a prespecifiable valve position, and wherein an instantaneous difference (85, 86, 87) between the feed line temperature and the return line temperature is ascertained at each heat consumer (16, 18, 20) until the instantaneous difference (85, 86, 87) reaches a prespecifiable value range.

**6.** Method according to one of Claims 1 to 5, **characterized in that** the return line temperatures of the heat consumers (16, 18, 20) are compared with one another, wherein the heat consumer (16, 18, 20) with the lowest return line temperature is defined as the heat consumer (16, 28, 20) with the poorest supply.

**7.** Method according to one of Claims 1 to 6, **characterized in that** the instantaneous difference (85, 86, 87) is compared with the instantaneous difference (85, 86, 87) which belongs to the heat consumer (16, 18, 20) with the poorest supply, wherein a new valve position is determined on the basis of this comparison.

**8.** Method according to Claim 7, **characterized in that** the new valve position is determined on the basis of an old valve position and the ratio of the instantaneous difference (85, 86, 87) to the instantaneous difference (85, 86, 87) which belongs to the heat consumer with the poorest supply, wherein this step is repeated until the change between the new valve position and the old valve position is less than a prespecifiable value, in particular 5%.

9. Method according to Claim 8, **characterized in that** the new valve position is determined on the basis of the equation

$$V\_new = V\_old*(T\_instant/T\_Ref)$$

where V_new is the new valve position, V_old is the old valve position, T_instant is the instantaneous difference (85, 86, 87) and T_Ref is the instantaneous difference (85, 86, 87) which belongs to the heat consumer with the poorest supply.

10. Method according to one of Claims 3 to 9, **characterized in that** a target return line temperature (111) is calculated, wherein a differential pressure of the pump (40) is reduced until the instantaneous return line temperature lies below the target return line temperature (111) or reaches the said target return line temperature, and/or until the instantaneous differential pressure reaches a prespecifiable differential pressure.

11. Method according to Claim 10, **characterized in that** the target return line temperature (111) is calculated on the basis of the formula

$$T\_Target,RL = f*T\_VL + O$$

wherein T_Target,RL is the target return line temperature (111), f and O are prespecifiable parameters, and T_VL is the feed line temperature, where the parameter f corresponds to a prespecifiable gradient and O corresponds to a prespecifiable value.

**Revendications**

1. Procédé d'exécution automatisée d'un équilibrage hydraulique d'une installation de chauffage (10), comprenant au moins un générateur de chaleur (12), des consommateurs de chaleur (16, 18, 20) comportant respectivement au moins une vanne (22, 24, 26), un capteur de température (28, 30, 32) dans le circuit aller du générateur de chaleur (12) et un capteur de température (34, 36, 38) dans le circuit retour du générateur de chaleur (12), **caractérisé en ce que** le consommateur de chaleur (16, 18, 20) présentant la température de retour la plus basse est déterminé, et **en ce que**, en partant de la température de retour la plus basse, la position des vannes (22, 24, 26) des autres consommateurs de chaleur (16, 18, 20) est déterminée de telle manière que toutes les températures de retour se situent dans une plage prédéfinissable.

2. Procédé selon la revendication 1, **caractérisé en ce que** la détermination de la position de la vanne est effectuée de manière itérative.

3. Procédé selon l'une des revendications 1 ou 2, **caractérisé en ce que** l'installation de chauffage (10) comporte une pompe (40) dont la vitesse de rotation est réglable, et **en ce qu'**il est vérifié si de l'eau circule dans les consommateurs de chaleur (16, 18, 20), dans lequel

- une pression différentielle prédéfinissable, en particulier une pression différentielle maximale, de la pompe (40) est réglée,
- toutes les vannes (16, 18, 20) sauf une sont fermées, dans lequel une température de retour de la vanne ouverte (16, 18, 20) est déterminée, dans lequel un signal est généré lorsque la température de retour augmente,
- cette étape est répétée pour d'autres vannes (16, 18, 20), en particulier toutes les vannes.

4. Procédé selon l'une des revendications 1 à 3, **caractérisé en ce que**, lorsque la température de retour augmente, le capteur de température correspondant (34, 36, 38) est associé au consommateur de chaleur (16, 18, 20) dont la vanne est ouverte (22, 24, 26).

5. Procédé selon l'une des revendications 1 à 4, **caractérisé en ce que**, pour déterminer l'alimentation d'un consommateur de chaleur (16, 18, 20), le générateur de chaleur (12) est amené à fonctionner avec une puissance prédéfinie, en particulier une puissance minimale prédéfinie, dans lequel toutes les vannes (22, 24, 26) sont ouvertes avec une position de vanne prédéfinie, et dans lequel une différence instantanée (85, 86, 87) entre les températures aller et retour de chaque consommateur de chaleur (16, 18, 20) est déterminée jusqu'à ce que la différence instantanée (85, 86, 87) atteigne une plage de valeurs prédéfinissable.

6. Procédé selon l'une des revendications 1 à 5, **caractérisé en ce que** les températures de retour des consommateurs de chaleur (16, 18, 20) sont comparées les unes aux autres, dans lequel le consommateur de chaleur (16, 18, 20) présentant la température de retour la plus basse est déterminé comme étant le consommateur de chaleur (16, 28, 20) le moins bien alimenté.

7. Procédé selon l'une des revendications 1 à 6, **caractérisé en ce que** la différence instantanée (85, 86, 87) est comparée à la différence instantanée (85, 86, 87) correspondant au consommateur de chaleur le moins bien alimenté (16, 18, 20), dans lequel une nouvelle position de la vanne est déterminée sur la base de ladite comparaison.

8. Procédé selon la revendication 7, **caractérisé en ce que** la nouvelle position de la vanne est déterminée sur la base d'une ancienne position de la vanne et du rapport de la différence instantanée (85, 86, 87) à la différence instantanée (85, 86, 87) qui correspond au consommateur de chaleur le moins bien alimenté, dans lequel ladite étape est répétée jusqu'à ce que la variation entre la nouvelle et l'ancienne position de la vanne soit inférieure à une valeur prédéfinissable, en particulier 5%.

9. Procédé selon la revendication 8, **caractérisé en ce que** la nouvelle position de la vanne est déterminée au moyen de l'équation

$$V_{neu} = V_{alt} * (T_{mom} / T_{Ref}),$$

où $V_{neu}$ est la nouvelle position de la vanne, $V_{alt}$ est l'ancienne position de la vanne, $T_{mom}$ est la différence instantanée (85, 86, 87) et $T_{Ref}$ est la différence instantanée (85, 86, 87) correspondant au consommateur de chaleur le moins bien alimenté.

10. Procédé selon l'une des revendications 3 à 9, **caractérisé en ce qu'**une température de retour de consigne (111) est calculée, dans lequel une pression différentielle de la pompe (40) est réduite jusqu'à ce que la température de retour instantanée devienne inférieure ou égale à la température de retour de consigne (111) et/ou jusqu'à ce que la pression différentielle instantanée atteigne une pression différentielle prédéfinissable.

11. Procédé selon la revendication 10, **caractérisé en ce que** la température de retour de consigne (111) est calculée sur la base de la formule

$$T_{Soll,RL} = f * T_{VL} + O,$$

où $T_{Soll,RL}$ est la température de retour de consigne (111), f et O sont des paramètres définissables et $T_{VL}$ est la température de départ, dans lequel le paramètre f correspond à une pente prédéfinissable et le paramètre O correspond à une valeur prédéfinissable.

Fig. 1

**Fig. 2**

**Fig. 3**

# Fig. 4a

52

56

54

# Fig. 4b

62

52

58

54

60

# Fig. 5

**Fig. 6**

```
                    ┌─────────────┐
                    │    Start    │
                    └──────┬──────┘
                           │
                           ▼                        ┌──────────┐
          ┌─────────────────────┐ ◄────────────────│          │──── 82
      80 ─│                     │                   └──────────┘
          │                     │ ◄────────────────┌──────────┐
          └──────────┬──────────┘                  │          │──── 84
                     │                              └──────────┘
                     ▼
          ┌─────────────────────┐
      82 ─│                     │
          └──────────┬──────────┘
                     │                              ┌──────────┐
                     ▼                        ┌────►│          │──── 85
          ┌─────────────────────┐             │    └──────────┘
      84 ─│                     │─────────────┼───►┌──────────┐
          └──────────┬──────────┘             │    │          │──── 86
              ▲      │                         │    └──────────┘
       nein   │      │                         └───►┌──────────┐
              │      ▼                              │          │──── 87
              │   ╭───────╮                         └──────────┘
              └───│       │──── 88
                  ╰───┬───╯
                      │ ja
                      ▼
          ┌─────────────────────┐
          │                     │──── 90
          └──────────┬──────────┘
                     │
                     ▼
          ┌─────────────────────┐
      ┌──►│                     │──── 92
      │   └──────────┬──────────┘
 nein │              │
      │              ▼
      │           ╭───────╮
      └───────────│       │──── 94
                  ╰───┬───╯
                      │ ja
                      ▼
          ┌─────────────────────┐
          │        Ende         │
          └─────────────────────┘
```

# Fig. 7a

# Fig. 7b

110 — ☐ → ☐ — 111

112

nein

114

ja

nein → Ende

116

ja

118

**IN DER BESCHREIBUNG AUFGEFÜHRTE DOKUMENTE**

**In der Beschreibung aufgeführte Patentdokumente**

- AT 509913 B1
- DE 102009004319 A1
- DE 102012020750 A1